(19) Europäisches Patentamt / European Patent Office / Office européen des brevets

(11) **EP 3 096 429 B1**

(12) **EUROPEAN PATENT SPECIFICATION**

(45) Date of publication and mention
of the grant of the patent:
**11.12.2019 Bulletin 2019/50**

(51) Int Cl.:
**H02J 3/01** *(2006.01)*

(21) Application number: **15168822.3**

(22) Date of filing: **22.05.2015**

(54) **IDENTIFICATION OF LCL FILTER PARAMETERS**

IDENTIFIZIERUNG VON LCL-FILTER-PARAMETERN

IDENTIFICATION DE PARAMÈTRES DE FILTRE LCL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.11.2016 Bulletin 2016/47**

(73) Proprietor: **ABB Schweiz AG**
**5400 Baden (CH)**

(72) Inventors:
• **Koppinen, Jussi**
**02780 Espoo (FI)**
• **Kukkola, Jarno**
**02650 Espoo (FI)**
• **Hinkkanen, Marko**
**02650 Espoo (FI)**

(74) Representative: **Kolster Oy Ab**
**(Salmisaarenaukio 1)**
**P.O. Box 204**
**00181 Helsinki (FI)**

(56) References cited:
EP-A1- 2 362 515  WO-A1-2009/056158
CN-A- 103 986 187  CN-U- 203 850 834
US-A1- 2013 135 907  US-A1- 2013 346 002

• **KUKKOLA JARNO ET AL: "Observer-based state-space current controller for a grid converter equipped with an LCL filter: Analytical method for direct discrete-time design in synchronous coordinates", 2014 IEEE ENERGY CONVERSION CONGRESS AND EXPOSITION (ECCE), IEEE, 14 September 2014 (2014-09-14), pages 4458-4465, XP032681039, DOI: 10.1109/ECCE.2014.6953731 [retrieved on 2014-11-11]**
• **B. BOLSENS ET AL: "Model-Based Generation of Low Distortion Currents in Grid-Coupled PWM-Inverters Using an LCL Output Filter", IEEE TRANSACTIONS ON POWER ELECTRONICS, vol. 21, no. 4, 1 July 2006 (2006-07-01), pages 1032-1040, XP055227868, USA ISSN: 0885-8993, DOI: 10.1109/TPEL.2006.876840**
• **JASON P RHODE ET AL: "Complete Characterization of Utilization-Voltage Power System Impedance Using Wideband Measurement", IEEE TRANSACTIONS ON INDUSTRY APPLICATIONS, IEEE SERVICE CENTER, PISCATAWAY, NJ, US, vol. 33, no. 6, 1 December 1997 (1997-12-01), XP011022305, ISSN: 0093-9994**
• **LISERRE M ET AL: "Grid Impedance Estimation via Excitation of -Filter Resonance", IEEE TRANSACTIONS ON INDUSTRY APPLICATIONS, IEEE SERVICE CENTER, PISCATAWAY, NJ, US, vol. 43, no. 5, 1 September 2007 (2007-09-01), pages 1401-1407, XP011192489, ISSN: 0093-9994, DOI: 10.1109/TIA.2007.904439**

EP 3 096 429 B1

- HOFFMANN NILS ET AL: "Minimal Invasive Equivalent Grid Impedance Estimation in Inductive-Resistive Power Networks Using Extended Kalman Fi", IEEE TRANSACTIONS ON POWER ELECTRONICS, INSTITUTE OF ELECTRICAL AND ELECTRONICS ENGINEERS, USA, vol. 29, no. 2, 1 February 2014 (2014-02-01), pages 631-641, XP011524640, ISSN: 0885-8993, DOI: 10.1109/TPEL.2013.2259507 [retrieved on 2013-08-20]
- DAVID REIGOSA ET AL: "Active Islanding Detection Using High-Frequency Signal Injection", IEEE TRANSACTIONS ON INDUSTRY APPLICATIONS, IEEE SERVICE CENTER, PISCATAWAY, NJ, US, vol. 48, no. 5, 1 September 2012 (2012-09-01), pages 1588-1597, XP011461558, ISSN: 0093-9994, DOI: 10.1109/TIA.2012.2209190
- ROINILA TOMI ET AL: "Broadband methods for online grid impedance measurement", 2013 IEEE ENERGY CONVERSION CONGRESS AND EXPOSITION, IEEE, 15 September 2013 (2013-09-15), pages 3003-3010, XP032516387, DOI: 10.1109/ECCE.2013.6647093 [retrieved on 2013-10-24]
- HUERTA F ET AL: "Black-box Identification for an auto-tuned current controller working with Voltage Source Converters connected to the grid through a LCL filter", INDUSTRIAL ELECTRONICS (ISIE), 2010 IEEE INTERNATIONAL SYMPOSIUM ON, IEEE, PISCATAWAY, NJ, USA, 4 July 2010 (2010-07-04), pages 96-101, XP031803304, ISBN: 978-1-4244-6390-9

**Description**

FIELD OF THE INVENTION

The present invention relates to identification of LCL filter parameters, and particularly to identification of parameters of grid connected LCL filter using a converter.

BACKGROUND OF THE INVENTION

LCL filters are increasingly used in connection with grid-connected converters due to effective attenuation of switching harmonics. For example, LCL filters are used between an inverter and grid for eliminating harmonics and shaping the current and voltage waveforms generated by the inverter when feeding power to the grid. However, the resonance caused by the LCL filters makes the control of these converters more challenging.

The resonance of the LCL filter should be damped sufficiently, preferably with active methods, so that additional losses can be avoided. These active damping methods often rely on the knowledge of the LCL filter parameters. In active damping methods, the parameters of the LCL filter are fed to a controller so that the control of the converter can take account the inclusion of such filter.

The LCL filter together with an inductive grid impedance forms an LCL circuit whose physical parameter values could be utilized in tuning the controller of the converter. Frequently, the grid inductance is neglected and only the data sheet values of the filter parameters are used for the tuning. This might lead to a poor control performance due to incorrect data sheet values. Further, the influence of the grid inductance might become essential if compact filters are connected to a weak grid because then the grid inductance would cover relatively larger portion from the total grid-side inductance.

The LCL circuit parameters could either be measured or estimated. The estimation methods are usually preferred, since the measuring methods often require additional equipment including sensors that are expensive and prone to failures. The estimation methods can mainly be divided into two subclasses: nonparametric and parametric estimation methods. Nonparametric methods try to estimate the frequency response of a system while the parametric methods try to estimate parameters from a predefined model structure. From a control point of view, parametric methods are usually more suitable because the parameters can be used in control tuning.

Various studies have concentrated on grid-impedance [1-4] or LC circuit impedance [5] acquisition methods but only a small number of studies have considered the whole LCL circuit [6]. In [1], a grid impedance is successfully measured using sinusoidal current signal injection. However, additional equipment is required and the procedure takes several minutes to complete. In [2], the grid inductance is estimated using the knowledge of the LCL filter resonance frequency.

In [3], an extended Kalman filter (EKF) is used to estimate inductive and resistive parts of the grid impedance. However, perhaps the most serious disadvantage of this method is that the tuning of the covariance matrices of the EKF is based on a trial-and-error procedure. In [4], the estimated grid impedance is used for active islanding detection. In [5], the frequency response of an LC circuit is measured using pseudo random binary sequence (PRBS) as an excitation signal which enables fast measuring procedure. However, measurements of the phase voltages over the capacitors and the converter-side phase currents are needed. Another limitation is that the frequency response cannot be directly used in control tuning. In [6], the discrete-time parameters of the whole LCL circuit are estimated. However, the connection to the physical world remains untouched.

A shortcoming of the known methods is that they require additional circuitry and do not enable automatic tuning of the control of the converter if the parameters of the LCL filter are not known.

BRIEF DESCRIPTION OF THE INVENTION

An object of the present invention is to provide a method and an apparatus for implementing the method so as to overcome the above problem. The objects of the invention are achieved by a method and an arrangement which are characterized by what is stated in the independent claims. The preferred embodiments of the invention are disclosed in the dependent claims.

The invention is based on using estimated discrete-time model and analytical discrete-time model for estimating the physical parameters of the LCL circuit. As physical parameters of LCL filter are estimated, the estimation results can further be used in tuning the controller of the converter so that resonances of the filter are damped. The physical estimated parameters are the values of two inductances and the value of the capacitance.

In estimating discrete-time parameters, a discrete-time Box and Jenkins model structure is preferably used. The discrete-time parameters are further solved from the model structure, and based on the solved discrete-time parameters and analytical discrete-time model the physical parameters are solved.

In a preferred embodiment a PRBS voltage is injected to a reference voltage as an excitation signal and converter side current is sampled to be used in estimating discrete-time parameters. Further, identification is performed using an indirect method, i.e., the effect of the current controller is taken into account [7].

The present invention does not require an injection circuit or additional sensors for estimating the physical parameters of an LCL filter. Further, the invention provides the desired parameters of the lossless LCL filter that can be used to automatize control tuning [8]. Further, as physical parameter values are obtained, the values are understandable as such. The invention helps in saving costs and time, as additional sensors can be omitted and the control tuning can be carried out automatically if desired. In the present disclosure, the grid impedance is also taken into account in the estimated parameters, as the grid impedance is sensed by the controller as being summed to the impedance of the filter.

BRIEF DESCRIPTION OF THE DRAWINGS

In the following the invention will be described in greater detail by means of preferred embodiments with reference to the attached drawings, in which

Figure 1 shows an LCL filter connected to the grid in stationary coordinates;
Figure 2 shows a block diagram of the grid-converter system; and
Figure 3 shows setup used in the identification according to an embodiment.

DETAILED DESCRIPTION OF THE INVENTION

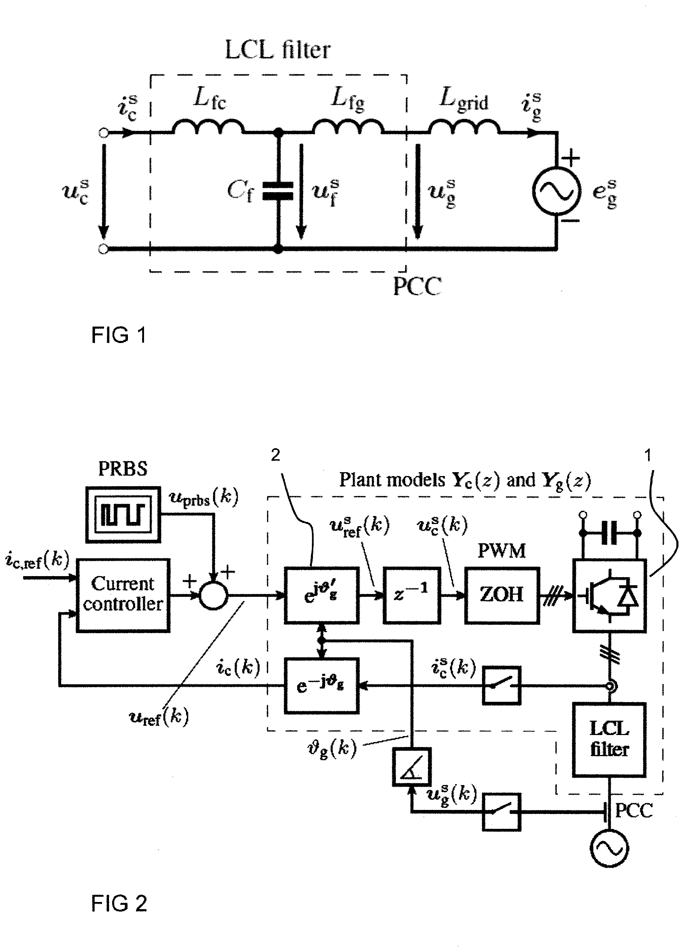

Figure 1 shows a model of the LCL filter and the grid using complex-valued space vectors in stationary coordinates. The LCL filter, modelled as a converter-side inductance $L_{fc}$, capacitance $C_f$, and grid-side inductance $L_{fg}$, is connected between the grid converter and the point of common coupling (PCC). The grid, i.e. the electrical power network, is modelled by its Thevenin equivalent circuit composed of the grid voltage $e_g^s$ and the inductance $L_{grid}$. The angular frequency of the grid is $\omega_g$. The LCL filter together with the grid form an LCL circuit having the total grid-side inductance $L_{gt} = L_{fg} + L_{grid}$. The parameters to be estimated are $\{L_{fc}, C_f, L_{gt}\}$. Thus in the estimation according to the invention, the inductance of the grid is taken into account as the grid side inductance of the filter and the grid inductance are effectively summed in viewpoint of the converter.

Figure 2 shows a block diagram of the grid-converter system. It consists of a grid converter 1, an LCL filter, a pulse-width modulator (PWM), and a current controller. In the present disclosure, the current controller is a simple proportional controller. The control system is tied to the grid-voltage angle $\vartheta_g$ obtained using a phase-lock loop. The current reference $\mathbf{i}_{c,ref}$ is the output of the DC-voltage controller (not shown in the figure). The sampled converter-side current $\mathbf{i}_c$ is obtained by transforming measured converter phase currents into the dq-coordinates. The actual converter voltage $\mathbf{u}_c$ is produced based on the voltage reference $\mathbf{u}_{ref}$ obtained from the current controller. Due to finite computational time of the control algorithm, the actual voltage is delayed by one sampling period $\mathbf{u}_c(k) = z^{-1}\mathbf{u}_{ref}(k)$.

In the block diagram of the grid-converter system of Figure 2 the sampling of the measured signals, ZOH of the converter voltage, and the computational delay $z^{-1}$ are included. The angle $\omega_g T_s$ caused by the delay is compensated for in the dq → abc transformation 2, i.e., $\vartheta_g' = \vartheta_g + \omega_g T_s$, where $T_s$ is the time between sampling instants.

The plant surrounded by the dashed lines in Figure 2 can be described with the following discrete-time state equations if a state vector is selected as $\mathbf{x} = [\mathbf{i}_c, \mathbf{u}_f, \mathbf{i}_g, \mathbf{u}_c]^T$, a zero-order hold for the switching-cycle averaged converter output voltage is assumed and synchronous sampling is used [8]:

$$\mathbf{x}(k+1) = \underbrace{\begin{bmatrix} \mathbf{\Phi} & \mathbf{\Gamma}_c \\ 0 & 0 \end{bmatrix}}_{\mathbf{\Phi}_d} \mathbf{x}(k) + \underbrace{\begin{bmatrix} 0 \\ 1 \end{bmatrix}}_{\mathbf{\Gamma}_{cd}} \mathbf{u}_{ref}(k) + \underbrace{\begin{bmatrix} \mathbf{\Gamma}_g \\ 0 \end{bmatrix}}_{\mathbf{\Gamma}_{gd}} \mathbf{e}_g(k) \qquad (1)$$

$$\mathbf{i}_c(k) = \mathbf{C}_d \mathbf{x}(k)$$

where

$$\boldsymbol{\Phi} = \gamma \begin{bmatrix} \left(L_{\text{fc}} + L_{\text{gt}}K\right)/L_{\text{t}} & -S/\left(\omega_{\text{p}}L_{\text{fc}}\right) & L_{\text{gt}}\left(1-K\right)/L_{\text{t}} \\ S/\left(\omega_{\text{p}}C_{\text{f}}\right) & K & -S/\left(\omega_{\text{p}}C_{\text{f}}\right) \\ L_{\text{fc}}\left(1-K\right)/L_{\text{t}} & S/\left(\omega_{\text{p}}L_{\text{gt}}\right) & \left(L_{\text{fc}} + L_{\text{gt}}K\right)/L_{\text{t}} \end{bmatrix} \tag{2}$$

$$\boldsymbol{\Gamma}_{\text{c}} = \begin{bmatrix} b_{\text{c1}} \\ b_{\text{c2}} \\ b_{\text{c3}} \end{bmatrix} = \frac{\gamma}{L_{\text{t}}} \begin{bmatrix} T_{\text{s}} + L_{\text{gt}}S/\left(\omega_{\text{p}}L_{\text{fc}}\right) \\ L_{\text{gt}}\left(1-K\right) \\ T_{\text{s}} - S/\omega_{\text{p}} \end{bmatrix} \qquad \mathbf{C}_{\text{d}} = \begin{bmatrix} 1 & 0 & 0 & 0 \end{bmatrix} \tag{3}$$

$$K = \cos\left(\omega_{\text{p}}T_{\text{s}}\right) \quad S = \sin\left(\omega_{\text{p}}T_{\text{s}}\right) \quad L_{\text{t}} = L_{\text{fc}} + L_{\text{gt}} \quad \omega_{\text{p}} = \sqrt{\frac{L_{\text{fc}} + L_{\text{gt}}}{L_{\text{fc}}L_{\text{gt}}C_{\text{f}}}} \quad \gamma = e^{-j\omega_g T_s} \tag{4}$$

where $\Gamma_{gd}$ is the input matrix for $\mathbf{e}_g$. The pulse-transfer function from $\mathbf{u}_{\text{ref}}$ to $\mathbf{i}_c$ can be expressed as

$$\mathbf{Y}_{\text{c}}(z) = \frac{\mathbf{i}_{\text{c}}(z)}{\mathbf{u}_{\text{ref}}(z)} = \mathbf{C}_{\text{d}}\left(z\mathbf{I} - \boldsymbol{\Phi}_{\text{d}}\right)^{-1}\boldsymbol{\Gamma}_{\text{cd}} = z^{-1}\frac{b_1\gamma z^{-1} + b_2\gamma^2 z^{-2} + b_3\gamma^3 z^{-3}}{1 + a_1\gamma z^{-1} + a_2\gamma^2 z^{-2} + a_3\gamma^3 z^{-3}} \tag{5}$$

where $z$ is the time-shift operator, $b_1...b_3$ and $a_1... a_3$ are discrete-time parameters.

If the losses of the LCL circuit are neglected, following linear dependences are obtained: $p_1 = b_1 = b_3$, $p_2 = b_2$, $p_3 = -a_1 = a_2$, and $a_3 = -1$ where parameters $p_1...p_3$ are to be estimated and can be described as

$$p_1 = \frac{1}{L_{\text{t}}}\left(T_{\text{s}} + \frac{L_{\text{gt}}S}{\omega_{\text{p}}L_{\text{fc}}}\right) \qquad p_2 = \frac{2}{L_{\text{t}}}\left(T_{\text{s}}K + \frac{L_{\text{gt}}S}{\omega_{\text{p}}L_{\text{fc}}}\right) \qquad p_3 = 1 + 2K \tag{6}$$

The pulse-transfer function from $e_g$ to $i_c$ can be expressed as

$$\mathbf{Y}_{\text{g}}(z) = \frac{\mathbf{i}_{\text{c}}(z)}{\mathbf{e}_{\text{g}}(z)} = \mathbf{C}_{\text{d}}\left(z\mathbf{I} - \boldsymbol{\Phi}_{\text{d}}\right)^{-1}\boldsymbol{\Gamma}_{\text{gd}} \tag{7}$$

According to an embodiment of the invention, an analytical discrete-time model of the LCL filter and the converter is formed. Further, a pulse transfer function of the analytical discrete-time model having discrete time parameters is formed.

If the discrete-time parameters are available, the physical parameters can be found by comparing the analytical pulse-transfer function with the estimated pulse-transfer function. Here, equations for the parameters $\{L_{\text{fc}}, C_{\text{f}}, L_{\text{gt}}\}$ are derived using (4) and (6):

$$L_{\text{fc}} = \frac{2ST_{\text{s}}\left(K-1\right)}{2p_1\left(\omega_{\text{p}}T_{\text{s}}K - S\right) + p_2\left(\omega_{\text{p}}T_{\text{s}} - S\right)} \qquad L_{\text{gt}} = \frac{\omega_{\text{p}}L_{\text{fc}}\left(L_{\text{fc}}p_2 + 2T_{\text{s}}K\right)}{\omega_{\text{p}}L_{\text{fc}}p_2 + 2S}$$

$$\tag{8}$$

$$C_{\text{f}} = \frac{L_{\text{fc}} + L_{\text{gt}}}{\omega_{\text{p}}^2 L_{\text{fc}}L_{\text{gt}}}$$

where

$$K = \frac{p_3 - 1}{2} \qquad \omega_p = \frac{\arccos(K)}{T_s} \qquad\qquad (9)$$

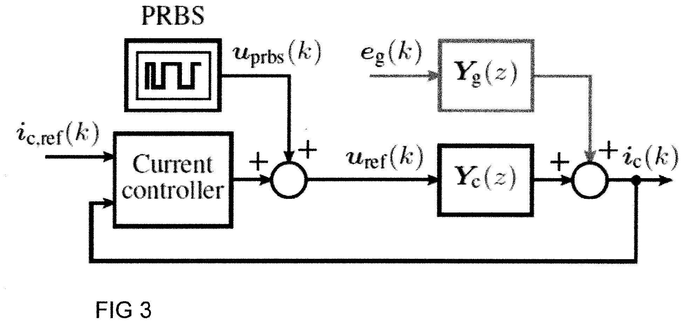

In the invention, the discrete-time parameters $p_1...p_3$ in (5) are estimated and then the physical parameters $\{L_{fc}, C_f, L_{gt}\}$ are solved using (8) and (9). Figure 3 shows a closed-loop setup used for the LCL circuit identification. A PRBS signal $u_{prbs}$ is used as an excitation signal and superimposed on the voltage-reference $u_{ref}$ obtained from the current controller.

Closed-loop identification is performed using an indirect method, i.e., the effect of the current controller on the regressors is taken into account [7]. In this way, the correlation between the identification input and noise signal can be avoided and less biased parameter estimates obtained. The transfer function from $u_{prbs}$ to $i_c$ is

$$\frac{\mathbf{i}_c(z)}{\mathbf{u}_{prbs}(z)} = \frac{\mathbf{Y}_c(z)}{1 + k_p \mathbf{Y}_c(z)} \qquad\qquad (10)$$

where $k_p$ is the gain of the proportional current controller. For parameter estimation, a discrete-time Box and Jenkins model structure is considered. In order to effectively estimate the desired three parameters $p_1...p_3$, the minimal realization corresponding to (10) is derived:

$$\underbrace{\left[1 - \gamma^3 z^{-3}\right] \mathbf{i}_c(z)}_{\text{output}} = p_3 \underbrace{\left[\gamma z^{-1} - \gamma^2 z^{-2}\right] \mathbf{i}_c(z)}_{\text{regressor 1}} + p_1 \underbrace{\left(\gamma z^{-2} + \gamma^3 z^{-4}\right)\left[-k_p \mathbf{i}_c(z) + \mathbf{u}_{prbs}(z)\right]}_{\text{regressor 2}}$$

$$+ p_2 \underbrace{\gamma^2 \left[-k_p z^{-3} \mathbf{i}_c(z) + z^{-3} \mathbf{u}_{prbs}(z)\right]}_{\text{regressor 3}} + \frac{C(z)}{D(z)} \mathbf{e}(k) \qquad\qquad (11)$$

where $C(z)$ and $D(z)$ are the numerator and the denominator of a noise polynomial of white noise $\mathbf{e}$. The regressors and output are chosen as shown in (11). It is worth noticing that $\mathbf{e}_g$ is assumed to be constant. Further, effects of grid-voltage harmonics can be diminished by filtering sampled data vectors $\mathbf{u}_{prbs}$ and $\mathbf{i}_c$. The discrete parameters are solved using Gauss-Newton algorithm.

In the method of the invention, an analytical discrete-time model is formed as in equations (1) to (4) based on physical plant of the converter-filter system. Based on the formed model, a pulse transfer function is formed, the pulse transfer function is preferably from voltage reference to the converter output current as in equation (5). Further, in the embodiment, a voltage signal is superimposed on the reference voltage to the system. The superimposed voltage signal is preferably a pseudo-random binary sequence (PRBS). While the above modified reference voltage is fed to the system, the output current of the converter, i.e. input current to the LCL-filter is measured or sampled.

When the output current and the voltage signal are known, the discrete-time parameters of the system are estimated using a time series method. One suitable time series method for parameter estimation is discrete-time Box Jenkins model structure presented in equations (10) and (11). With the time series method the estimates of discrete-time parameters are obtained. Once the discrete-time parameters are estimated, the physical filter parameters can be solved based analytical discrete-time model with equations (8) and (9).

The obtained physical parameters can be directly received by the controller of the converter such that the LCL filter parameters are taken into account in the control of the converter. The estimation of the LCL filter parameters may be implemented automatically during the commissioning of the converter. During the installation and commissioning the converter may prompt the user to start estimation of the filter parameters if the filter is an option of the converter. If the LCL filter is assembled as an integral part of the system, then the parameter estimation procedure can be set to be an automated part of the commissioning or first start of the converter at the installation site.

When the LCL filter values are estimated, the values are preferably also displayed to the user of the system such that the user may compare the obtained values with datasheet values. Further, the values are preferably stored in the converter such that the values can be accessed by the user.

According to an embodiment, the estimation of the physical parameters is carried out periodically. As the estimation of the parameters is repeated, the operation of the converter can adapted to possibly changed conditions as also the grid inductance is estimated together with the grid side inductance of the LCL filter.

In the method, the required data relating to solving of the physical parameters of the LCL filter is stored in the converter such that the physical parameters can be solved based on the injecting of the voltage signal, determining the output current of the converter, estimating the discrete-time parameters, and from the discrete-time parameters, solving the estimated physical parameters of the LCL filter.

In the device of the invention, a converter, that is connectable to a grid connected LCL filter, comprises means adapted to carry out the method of the invention. More specifically, the device comprises memory means which is able to store required data for solving the estimates for the physical parameters of the LCL filter. This required data includes for example, the information of equations (8) and (9) and algorithms required for solving the parameters from the equations. Further, the converter of the invention includes suitable means, such as a processor, for estimating the discrete time parameters based on the injected voltage signal and determined output current. It is also clear that measurement circuit and injecting circuit are required together with suitable memory for producing the injected voltage signal and storing the the output current. Preferably, the converter comprises program code that is able to estimate the discrete-time parameters using Box and Jenkins model structure.

The above described embodiment was tested experimentally. According to the experimental results, the estimation fit for the data is 89.7% and the mean square error is 0.06. The obtained parameter estimates were $p_1$ = 0.02586 - 0.00059j, $p_2$ = -0.04428 + 0.00097j, and $p_3$ = 2.477 - 0.004j. As can be seen, the parameters are quite close to the real axis as was predicted. The physical parameters were solved from the real parts of the estimated parameters $p_1...p_3$ using (8), resulting $L_{fc}$ = 3.1 mH, $C_f$ = 8.7 $\mu$F, and $L_{gt}$ = 2.8 mH. The data sheet values for the LCL filter used are $L_{fc,d}$ = 2.94 mH, $C_{f,d}$ = 10 $\mu$F, and $L_{gt,d}$ = 2.06 mH, respectively. For parameters $L_{fc}$ and $C_f$, the method shows good agreement. However, the estimated grid inductance is 36% larger than the data sheet value. Part of this increment is explained with the unknown inductance appeared in the grid.

The grid converter of the invention is preferably an inverter having controllable switch components and required circuitry for control of the components. The converter may be for supplying power to the electrical power network, i.e. to the voltage grid from a source of electrical energy. The converter may also intended for receiving power from the voltage grid and supplying it to a separate load. Further, the converter may be a combination of the above enabling power from to either direction.

In the above, the parameters of LCL filter are estimated by injecting a PSBS voltage signal. However, the injected signal may have any other suitable form and may be, for example random binary signal (RBS), filtered Gaussian white noise or multisine signal or any other signal having wide frequency spectrum.

Further, the measured or sampled current is used together with inputted voltage in Box and Jenkins model structure for estimating the discrete-time parameters. The Box and Jenkins model structure is presented as an example of a suitable structure. Another example for a suitable model is ARMAX model structure. Similarly, the Gauss-Newton method for solving the discrete-time parameters is presented as an example. Other methods or structures for solving the discrete-time parameters include linear methods, such as Extended least squares, Generalized least squares and Instrumental variable. In addition to presented Gauss-Newton method, other gradient methods, such as Levenberg-Marquardt, can be used for solving the discrete-time parameters.

REFERENCES

[1] J. Rhode, A. Kelley, and M. Baran, "Complete characterization of utilization-voltage power system impedance using wideband measurement," IEEE Transactions on Industry Applications, vol. 33, no. 6, pp. 1472-1479, Nov. 1997.
[2] M. Liserre, F. Blaabjerg, and R. Teodorescu, "Grid impedance estimation via excitation of LCL-filter resonance," IEEE Transactions on Industry Applications, vol. 43, no. 5, pp. 1401-1407, Sept. 2007.
[3] N. Hoffmann and F. Fuchs, "Minimal invasive equivalent grid impedance estimation in inductive-resistive power networks using extended kalman filter," IEEE Transactions on Power Electronics, vol. 29, no. 2, pp. 631-641, Feb. 2014.
[4] D. Reigosa, F. Briz, C. Charro, P. Garcia, and J. Guerrero, "Active islanding detection using high-frequency signal injection," IEEE Transactions on Industry Applications, vol. 48, no. 5, pp. 1588-1597, Sept. 2012.
[5] T. Roinila, M. Vilkko, and J. Sun, "Broadband methods for online grid impedance measurement," in IEEE Energy Conversion Congress and Exposition (ECCE), Sept. 2013, pp. 3003-3010.
[6] F. Huerta, S. Cobreces, F. Rodriguez, D. Pizarro, and F. Meca, "Black-box identification for an auto-tuned current controller working with voltage source converters connected to the grid through a LCL filter," in IEEE International Symposium on Industrial Electronics (ISIE), July 2010, pp. 96-101.
[7] U. Forssell and L. Ljung, "Closed-loop identification revisited," Automatica, vol. 35, pp. 1215-1241, July 1999.
[8] J. Kukkola, M. Hinkkanen, and K. Zenger, "Observer-based state-space current controller for a grid converter equipped with an LCL filter: Analytical method for direct discrete-time design in synchronous coordinates," in IEEE Energy Conversion Congress and Exposition (ECCE), Sept. 2014, pp. 4458-4465.

**Claims**

1. A method of estimating physical parameters of a LCL filter connected between a converter and electrical power network, the estimated physical parameters being converter-side inductance, capacitance and grid-side inductance together with grid inductance, the method comprising
forming an analytical discrete-time model of the LCL filter and the converter,
forming a discrete-time pulse-transfer function of the analytical discrete-time model having discrete time parameters,
injecting a voltage signal superimposed on the reference voltage to the converter,
determining output current of the converter,
based on the injected voltage signal and output current of the converter, estimating the discrete-time parameters,
based on the estimated discrete-time parameters solving the estimated physical parameters using the analytical discrete-time model.

2. A method according to claim 1, wherein the discrete-time model of the LCL filter and the converter includes the controller of the converter.

3. A method according to claim 1 or 2, wherein the discrete-time pulse transfer function from voltage reference to output current of the converter is formed.

4. A method according to claim 1, 2 or 3, wherein the voltage signal superimposed on the reference voltage is a pseudo random binary sequence - voltage signal, filtered Gaussian white noise voltage signal or multisine voltage signal.

5. A method according to any one of the previous claims 1 to 4, wherein the discrete-time parameters are estimated using Box and Jenkins model structure or ARMAX model structure.

6. A method according to claim 5, wherein the discrete-time parameters are solved using Gauss-Newton algorithm, Extended least squares, Generalized least squares, Instrumental variable or Levenberg-Marquardt algorithms.

7. A method according to any one of the previous claims 1 to 6, comprising further using the estimated physical parameters in the converter.

8. A converter connectable to an LCL filter connected to an electrical power network, wherein the converter comprises means for injecting a voltage signal superimposed on the reference voltage to the converter,
means for determining output current of the converter,
means for estimating discrete-time parameters of the LCL filter based on the injected voltage signal and output current of the converter, and
means for solving the estimated physical parameters based on the estimated discrete-time parameters of the LCL filter using an analytical discrete-time model of the LCL filter and the converter, the estimated physical parameters being converter-side inductance, capacitance and grid-side inductance together with grid inductance.

**Patentansprüche**

1. Verfahren zum Schätzen physikalischer Parameter eines LCL-Filters, das zwischen einen Umsetzer und ein elektrisches Leistungsnetz geschaltet ist, wobei die geschätzten physikalischen Parameter eine umsetzerseitige Induktivität, eine Kapazität und eine netzseitige Induktivität gemeinsam mit einer Netzinduktivität sind und das Verfahren Folgendes umfasst:

   Bilden eines analytischen zeitdiskreten Modells des LCL-Filters und des Umsetzers,
   Bilden einer zeitdiskreten Impulsübertragungsfunktion des analytischen zeitdiskreten Modells, das zeitdiskrete Parameter besitzt,
   Einspeisen eines Spannungssignals, das der Bezugsspannung des Umsetzers überlagert ist,
   Bestimmen eines Ausgangsstroms des Umsetzers,
   Schätzen der zeitdiskreten Parameter auf der Grundlage des eingespeisten Spannungssignals und des Ausgangsstroms des Umsetzers und
   Lösen der geschätzten physikalischen Parameter unter Verwendung des analytischen zeitdiskreten Modells auf der Grundlage der geschätzten zeitdiskreten Parameter.

**2.** Verfahren nach Anspruch 1, wobei das zeitdiskrete Modell des LCL-Filters und des Umsetzers die Steuereinheit des Umsetzers enthält.

**3.** Verfahren nach Anspruch 1 oder 2, wobei die zeitdiskrete Impulsübertragungsfunktion vom Spannungsbezug zum Ausgangsstrom des Umsetzers gebildet wird.

**4.** Verfahren nach Anspruch 1, 2 oder 3, wobei das Spannungssignal, das der Bezugsspannung überlagert ist, ein Spannungssignal einer pseudozufälligen Binärfolge, ein Spannungssignal eines gefilterten gaußschen weißen Rauschens oder Multisinusspannungssignal ist.

**5.** Verfahren nach einem der vorhergehenden Ansprüche 1 bis 4, wobei die zeitdiskreten Parameter unter Verwendung einer Box-Jenkins-Modellstruktur oder einer ARMAX-Modellstruktur geschätzt werden.

**6.** Verfahren nach Anspruch 5, wobei die zeitdiskreten Parameter unter Verwendung des Gauß-Newton-Algorithmus, erweiterter kleinster Quadrate, verallgemeinerter kleinster Quadrate, Instrumentenvariablen- oder Levenberg-Marquardt-Algorithmen gelöst werden.

**7.** Verfahren nach einem der vorhergehenden Ansprüche 1 bis 6, das ferner ein Verwenden der geschätzten physikalischen Parameter im Umsetzer umfasst.

**8.** Umsetzer, der mit einem LCL-Filter verbunden werden kann, das mit einem elektrischen Leistungsnetz verbunden ist, wobei der Umsetzer Folgendes umfasst:

Mittel zum Einspeisen eines Spannungssignals, das der Bezugsspannung des Umsetzers überlagert ist, Mittel zum Bestimmen eines Ausgangsstroms des Umsetzers, Mittel zum Schätzen der zeitdiskreten Parameter der LCL-Filter auf der Grundlage des eingespeisten Spannungssignals und des Ausgangsstroms des Umsetzers und Mittel zum Lösen der geschätzten physikalischen Parameter auf der Grundlage der geschätzten zeitdiskreten Parameter des LCL-Filters unter Verwendung eines analytischen zeitdiskreten Modells des LCL-Filters und des Umsetzers,
wobei die geschätzten physikalischen Parameter eine umsetzerseitige Induktivität, eine Kapazität und eine netzseitige Induktivität gemeinsam mit einer Netzinduktivität sind.

**Revendications**

**1.** Procédé d'estimation de paramètres physiques d'un filtre LCL connecté entre un convertisseur et un réseau d'alimentation électrique, les paramètres physiques estimés étant l'inductance côté convertisseur, la capacité et l'inductance côté réseau avec l'inductance du réseau, le procédé comprenant les étapes suivantes :

former un modèle analytique à temps discret du filtre LCL et du convertisseur,
former une fonction de transfert d'impulsions à temps discret du modèle analytique à temps discret ayant des paramètres temporels discrets,
injecter dans le convertisseur un signal de tension superposé à la tension de référence,
déterminer le courant de sortie du convertisseur,
sur la base du signal de tension injecté et du courant de sortie du convertisseur, estimer les paramètres de temps discret,
sur la base des paramètres de temps discret estimés, résoudre les paramètres physiques estimés en utilisant le modèle analytique à temps discret.

**2.** Procédé selon la revendication 1, dans lequel le modèle à temps discret du filtre LCL et du convertisseur comprend le contrôleur du convertisseur.

**3.** Procédé selon la revendication 1 ou la revendication 2, dans lequel la fonction de transfert d'impulsions à temps discret de la référence de tension au courant de sortie du convertisseur est formée.

**4.** Procédé selon les revendications 1, 2 ou 3, dans lequel le signal de tension superposé à la tension de référence est un signal de tension de séquence binaire pseudo-aléatoire, un signal de tension de bruit blanc gaussien filtré ou un signal de tension multi-sinusoïdal.

5. Procédé selon l'une quelconque des revendications précédentes 1 à 4, dans lequel les paramètres de temps discret sont estimés au moyen d'une structure de modèle Box and Jenkins ou d'une structure de modèle ARMAX.

6. Procédé selon la revendication 5, dans lequel les paramètres de temps discret sont résolus au moyen d'un algorithme de Gauss-Newton, des moindres carrés étendus, des moindres carrés généralisés, d'une variable instrumentale ou d'algorithmes de Levenberg-Marquardt.

7. Procédé selon l'une quelconque des revendications précédentes 1 à 6, comprenant en outre d'utiliser les paramètres physiques estimés dans le convertisseur.

8. Convertisseur connectable à un filtre LCL connecté à un réseau d'alimentation électrique, où le convertisseur comprend :

des moyens pour injecter un signal de tension superposé à la tension de référence dans le convertisseur,
des moyens pour déterminer le courant de sortie du convertisseur,
des moyens pour estimer des paramètres de temps discret du filtre LCL sur la base du signal de tension injecté et du courant de sortie du convertisseur, et
des moyens pour résoudre les paramètres physiques estimés sur la base des paramètres de temps discret estimés du filtre LCL au moyen d'un modèle analytique à temps discret du filtre LCL et du convertisseur, les paramètres physiques estimés étant l'inductance côté convertisseur, la capacité et l'inductance côté réseau avec l'inductance du réseau.

## LCL filter

FIG 1

FIG 2

FIG 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. RHODE ; A. KELLEY ; M. BARAN.** Complete characterization of utilization-voltage power system impedance using wideband measurement. *IEEE Transactions on Industry Applications,* November 1997, vol. 33 (6), 1472-1479
- **M. LISERRE ; F. BLAABJERG ; R. TEODORESCU.** Grid impedance estimation via excitation of LCL-filter resonance. *IEEE Transactions on Industry Applications,* September 2007, vol. 43 (5), 1401-1407
- **N. HOFFMANN ; F. FUCHS.** Minimal invasive equivalent grid impedance estimation in inductive-resistive power networks using extended kalman filter. *IEEE Transactions on Power Electronics,* February 2014, vol. 29 (2), 631-641
- **D. REIGOSA ; F. BRIZ ; C. CHARRO ; P. GARCIA ; J. GUERRERO.** Active islanding detection using high-frequency signal injection. *IEEE Transactions on Industry Applications,* September 2012, vol. 48 (5), 1588-1597
- **T. ROINILA ; M. VILKKO ; J. SUN.** Broadband methods for online grid impedance measurement. *IEEE Energy Conversion Congress and Exposition (ECCE),* September 2013, 3003-3010
- **F. HUERTA ; S. COBRECES ; F. RODRIGUEZ ; D. PIZARRO ; F. MECA.** Black-box identification for an auto-tuned current controller working with voltage source converters connected to the grid through a LCL filter. *IEEE International Symposium on Industrial Electronics (ISIE),* July 2010, 96-101
- **U. FORSSELL ; L. LJUNG.** Closed-loop identification revisited. *Automatica,* July 1999, vol. 35, 1215-1241
- **J. KUKKOLA ; M. HINKKANEN ; K. ZENGER.** Observer-based state-space current controller for a grid converter equipped with an LCL filter: Analytical method for direct discrete-time design in synchronous coordinates. *IEEE Energy Conversion Congress and Exposition (ECCE),* September 2014, 4458-4465